# EUROPÄISCHE PATENTANMELDUNG

(11) **EP 4 461 671 A1**
(43) Veröffentlichungstag der Anmeldung: **13.11.2024**
(21) Anmeldenummer: 24174546.2
(22) Anmeldetag: 07.05.2024
(51) Int. Cl.: B65G 1/02, A47B 47/02, A47F 1/12, B65G 1/04

(54) **REGALANORDNUNG**

(30) Priorität: 08.05.2023 DE 102023111918
(71) Anmelder: Nedcon B.V., 7005 BJ Doetinchem (NL)
(72) Erfinder: Hommelberg, Pieter A.M., 6718 LX Ede (NL); Hummelink, Jarno, 7136 LP Zieuwent (NL)
(74) Vertreter: Janke Scholl Patentanwälte PartG mbB

(57) **Zusammenfassung**

Vorgeschlagen wird eine Regalanordnung für die Warenlagerung, mit einer durch ein automatisch betriebenes Regalbedienfahrzeug (15) befahrbaren Gasse (10), einem ersten Regalelement (11) auf einer Seite der Gasse, einem zweiten Regalelement (12) auf der gegenüberliegenden anderen Seite der Gasse, einer zum Befahren durch das Regalbedienfahrzeug (15) ausgebildeten Schienenanordnung an den Regalelementen (11, 12), sowie in den Regalelementen (11, 12) angeordneten Warenträgern (30) mit Längserstreckung quer zu der Gasse (10). Jeder Warenträger (30) ist ein einstückiges Profilelement mit einer Auflagefläche (A) für die gelagerte Ware (W). Um zu einer besonders montagefreundlichen Lösung zu gelangen, weist jeder Warenträger (30) entlang seiner Längserstreckung abschnittsweise Materialverformungen (44, 55) auf, wobei sich zwischen längeren Hauptlängsabschnitten, auf denen der Warenträger (30) jeweils dieselbe, einheitliche Querschnittsform aufweist, kurze Längsabschnitte befinden, auf denen der Warenträger (30) eine durch die Materialverformung (44, 55) bedingte, abweichende Querschnittsform aufweist.

## Beschreibung

Die Erfindung betrifft eine Regalanordnung für die Warenlagerung, mit einer durch ein automatisch betriebenes Regalbedienfahrzeug befahrbaren Gasse, einem ersten Regalelement auf einer Seite der Gasse, einem zweiten Regalelement auf der gegenüberliegenden anderen Seite der Gasse, einer zum Befahren durch das Regalbedienfahrzeug ausgebildeten Schienenanordnung an den Regalelementen, sowie in den Regalelementen angeordneten Warenträgern mit Längserstreckung quer zu der Gasse, wobei jeder Warenträger ein einstückiges Profilelement ist, dessen Oberseite eine Auflagefläche für eine auf dem Warenträger lagerbare Ware bildet.

Derartige, häufig sehr ausgedehnte Regalanordnungen weisen beiderseits einer Regalgasse Regalelemente mit einer Vielzahl neben- und übereinander angeordneter Regalfächer auf. Die Regalfächer werden zur Warenlagerung häufig aus paarweise verwendeten Warenträgern gebildet, die sich quer zu der Regalgasse erstrecken und deren Oberseiten gemeinsam eine Auflagefläche für die in dem jeweiligen Regalfach lagerbaren Waren bildet. Die Warenträger selbst sind kostengünstig herstellbare Profile. Von der Regalgasse aus erfolgt die Beschickung der einzelnen Regalfächer bzw. Lagerplätze mit den Waren, und umgekehrt auch die Entnahme der Waren, wobei diese üblicherweise auf Paletten aufliegen. Derartige Anordnungen sind zum Beispiel aus der EP 1 559 346 B1, der EP 2 468 138 B1 und der DE 10 2020 122 840 A1 bekannt.

Bei der Regalanordnung nach der DE 10 2009 030 030 B4 erfolgt die Warenbeschickung und -entnahme durch ein in der Regalgasse automatisch fahrbares Regalbedienfahrzeug, ein sogenanntes "Shuttle". Dieses ist schienengeführt, wozu eine Schienenanordnung aus einer an dem ersten Regalelement befestigten, ersten Laufschiene und einer an dem zweiten Regalelement befestigten, zweiten Laufschiene vorgesehen ist. Das Fahrzeug ist neben der Längsfahrt in Regallängsrichtung in der Lage, einen integrierten Ausleger seitlich nach links oder rechts in die angrenzenden Regalfächer hinein zu bewegen, um dort Paletten auf den Warenträgern abzusetzen oder von diesen aufzunehmen.

Die quer zu der Gasse angeordneten Warenträger sind üblicherweise Profile und zumeist nach unten offene U-Profile, die aus gestanzten Blechteilen und insbesondere Blechplatten durch wenige und daher relativ preisgünstige Biegeprozesse herstellbar sind. Die Warenlagerung in ein- oder beidseitig offenen Regalfächern erfordert darüber hinaus noch verschiedene Zusatzmaßnahmen. So sind oft rückwärtige Begrenzungsanschläge erforderlich, durch die verhindert wird, dass Waren zu tief in Längsrichtung der Warenträger auf diesen abgesetzt werden. Zudem sind oft seitliche Anschläge erforderlich, um einen seitlichen Versatz der gelagerten Ware zu verhindern. Zum Beispiel kann es zu einem schleichenden seitlichen Versatz der Palette bzw. der Ware durch Erschütterungen kommen, die durch die Bewegung und die Arbeit des Shuttle in das Regalelement eingeleitet werden. Zu solchen Einflüssen kann es vor allem dann kommen, wenn die Laufschiene für den Shuttle an den Enden der langgestreckten Warenträger oder nahe zu diesen befestigt sind, und sich Verformungen der Laufschiene daher auch auf die Warenträger auswirken.

Die genannten und auch andere Maßnahmen erfordern entsprechende Zusatzbauteile, die ebenfalls innerhalb des Regalelements zu montieren und anschließend zu fixieren sind. Beides führt zu einem zusätzlichen Aufwand, wodurch sich der Vorteil relativiert, der im Prinzip mit preisgünstigen Profilen verbunden ist.

Vor diesem Hintergrund ist es daher das Ziel der Erfindung, hier zu einer besonders montagefreundlichen Lösung zu gelangen.

Zur Lösung dieser Aufgabe wird eine Regalanordnung mit den Merkmalen des

Patentanspruchs 1 vorgeschlagen. Bei dieser Regalanordnung weist der Warenträger entlang seiner Längserstreckung abschnittsweise Materialverformungen auf. Insbesondere befinden sich zwischen längeren Hauptlängsabschnitten des Warenträgers, auf denen der Warenträger jeweils dieselbe, einheitliche Querschnittsform aufweist, kurze Längsabschnitte, auf denen der Warenträger eine abweichende Querschnittsform aufweist. Dabei beruht die abweichende Querschnittsform auf einer gezielten Materialverformung bei der Produktion des Warenträgers.

Erreicht wird durch diese Maßnahmen eine besonders montagefreundliche Lösung, bei der Zusatzmaßnahmen, die im Rahmen einer weitgehend automatisierten Warenlagerung notwendig oder sinnvoll sind, ohne entsprechende Zusatzbauteile erzielt werden und damit ohne die Notwendigkeit, auch die entsprechenden Zusatzbauteile innerhalb des Regalelements montieren und anschließend fixieren zu müssen, was beides bei der Erstellung der Regalelemente zu einem zusätzlichen Aufwand und entsprechenden Kosten führen würde.

Stattdessen weist der jeweilige Warenträger zusätzlich zu den längeren Hauptlängsabschnitten, deren Funktion vor allem die Abstützung der jeweils aufliegenden Ware ist, vergleichsweise kürzere Längsabschnitte auf, auf denen der Warenträger die abweichende Querschnittsform aufweist. An diesen kürzeren Längsabschnitten sind bestimmte Zusatzfunktionen verwirklicht, die für die zuverlässige und störungsfreie Warenlagerung von Bedeutung sind.

Solche Zusatzfunktionen können z. B. seitliche Begrenzungen bzw. seitliche Anschläge für die auf der Auflagefläche des Warenträgers lagerbare Ware sein. Oder die Zusatzfunktion besteht in der Bereitstellung eines Begrenzungsanschlags in Längsrichtung für die auf der Auflagefläche lagerbare Ware. Ein solcher Längsanschlag stellt sicher, dass die Ware oder das Warengebinde nicht zu tief, also zu weit nach hinten, in das jeweilige Regalfach eingelagert werden kann.

In den Unteransprüchen sind bevorzugte Ausgestaltungen der Regalanordnung angegeben.

Vorzugsweise ist der Warenträger ein durch Biegeprozesse hergestelltes, einstückiges Profilelement, dessen Oberseite die Auflagefläche für die Ware bildet. Der Warenträger ist als ein nach oben offenes Profilelement von C-förmigem Profilquerschnitt ausgebildet, wobei die beiden freien Enden des Profilquerschnitts aufeinander zu gerichtet sind und so gemeinsam die Auflagefläche bilden. Von Vorteil ist, wenn sich die zwei Enden horizontal in derselben Horizontalebene erstrecken, so dass die Oberseiten der zwei Enden gemeinsam die Auflagefläche für die Ware bilden.

Vorzugsweise sind bei der Regalanordnung jeweils zwei Warenträger mit Abstand parallel zueinander angeordnet und bilden gemeinsam eine Auflage für die darauf lagerbare Ware, wobei die Materialverformungen an dem zweiten Warenträger spiegelbildlich im Vergleich zu den Materialverformungen an dem ersten Warenträger angeordnet sind.

Von Vorteil kann sein, wenn sich auf den kurzen Längsabschnitten die Materialverformungen bis in eine Horizontalebene höher als die Ebene der Auflagefläche erstrecken.

Die Materialverformungen können jeweils von dem Warenträger abstehende Laschen sein, vorzugsweise infolge eines Biegeprozesses abstehende Laschen.

Jeder Warenträger kann als ein nach oben offenes Profil von C-förmigem Profilquerschnitt ausgebildet sein, wobei die beiden Enden des Profilquerschnitts aufeinander zu gerichtet sind und gemeinsam die Auflagefläche für die Ware bilden.

Vorgeschlagen wird außerdem, dass die Laschen durch Querschlitze im Material des Warenträgers freigestellt sind, wobei sich die Querschlitze in einem der beiden Enden des Profilquerschnitts befinden und die Auflagefläche zwischen den Querschlitzen eine Unterbrechung aufweist.

Zur Bereitstellung seitlicher Anschläge für die auf der Auflagefläche lagerbare Ware wird vorgeschlagen, dass sich die Laschen auf mehreren der kurzen Längsabschnitte seitlich über die Auflagefläche hinaus erstrecken. In diesem Fall befinden sich alle seitlich über die Auflagefläche hinaus erstreckenden Laschen auf derselben Seite in Bezug auf die Längsmittellinie des Warenträgers.

Zur Bereitstellung eines Begrenzungsanschlags in Längsrichtung für die Ware wird vorgeschlagen, dass sich eine Lasche auf einem der kurzen Längsabschnitte nach oben über die Auflagefläche hinaus erstreckt.

Die Schienenanordnung sollte eine an dem ersten Regalelement befestigte, erste Laufschiene und eine an dem zweiten Regalelement befestigte, zweite Laufschiene umfassen, wobei die der Gasse zugewandten Enden der Warenträger direkt auf der jeweiligen Laufschiene abgestützt sind. Die Laufschiene kann ein Profil von S-förmigem Profilquerschnitt sein.

An der Laufschiene können ein Laufflächenabschnitt zum Befahren durch Laufräder des Regalbedienfahrzeugs und ein die Enden der Warenträger stützender Tragabschnitt ausgebildet sein.

Um zu verhindern, dass es zu einem Verkanten der Waren beim Längsverschieben kommt, kann vorgesehen sein, dass den Materialverformungen Führungsabschnitte zugeordnet sind, wobei die Führungsabschnitte in einer Draufsicht auf die Auflagefläche betrachtet eine Neigung zur Längserstreckung des Warenträgers aufweisen.

Die Führungsabschnitte dienen dazu, dass etwaige außermittig bewegte Waren, entlang der Führungsabschnitte abgleiten, um auf diese Weise zentriert und parallel zur Längserstreckung der Warenträger ausgerichtet zu werden. So kann ein Verkanten der Waren zwischen den Materialverformungen verhindert werden.

Gegenüberliegende Führungsabschnitte benachbarter Warenträger können eine Trichterform ausbilden.

Jeder Materialverformung können zwei Führungsabschnitte zugeordnet sein, um ein Zentrieren und Führung entlang der Längserstreckung des Materialträgers betrachtet in beiden Bewegungsrichtungen zu ermöglichen.

Die Führungsabschnitte können Teil der Laschen sein. Die Führungsabschnitte können daher integraler Bestandteil der Laschen sein und insbesondere einstückig mit den Laschen gebildet sein. So kann eine kostengünstige Integration der Laschen erreicht werden.

Die Führungsabschnitte können an den Laschen befestigte Aufsätze sein, insbesondere auf die Laschen aufgesteckte Aufsätze sein. So könnend die Aufsätze als Verschleißteile austauschbar sein und/oder in ihren Dimensionen an die zu lagernden Waren angepasst sein. Weiter können die Führungsabschnitte an bestehenden Systemen nachgerüstet werden.

Weitere Einzelheiten werden im Folgenden anhand der zugehörigen Zeichnung beschrieben. Auf der Zeichnung zeigen:
- Fig. 1: eine Seitenansicht einer einzelnen Lagerebene einer Regalanordnung, mit zu beiden Seiten einer Regalgasse angeordneten Regalfächern, mit in den Regalfächern gelagerten Waren, sowie mit einem zwischen den Regalfächern angeordneten Regalbedienfahrzeug;
- Fig. 2: eine Stirnansicht auf zwei benachbarte Regalfächer von der Regalgasse aus, wobei jedes der zwei Regalfächer zwei Warenträger umfasst, und wobei zwecks einfacherer Darstellung die gelagerten Waren nicht dargestellt sind;
- Fig. 3: den in der Fig. 1 links der Regalgasse angeordneten Warenträger in einer kombinierten Darstellung aus einer Draufsicht, einer Seitenansicht sowie einem Querschnitt
- Fig. 4: eine weitere Ausgestaltung eines Warenträgers für eine Regalanordnung;
- Fig. 5: eine weitere Ausgestaltung eines Warenträgers für eine Regalanordnung.

Die hier beschriebene Regalanordnung dient dem vollautomatischen Ein- und Auslagern von Waren W und vorzugsweise von Waren auf standardisierten Paletten oder in standardisierten Behältern. Zum Einsatz kommt die Regalanordnung zum Beispiel in einem räumlich ausgedehnten Waren- bzw. Palettenlager. Darin erfolgt das Lagern der Waren W in einheitlich gestalteten Regalfächern, die in großer Zahl nebeneinander und in Stockwerken übereinander angeordnet sind.

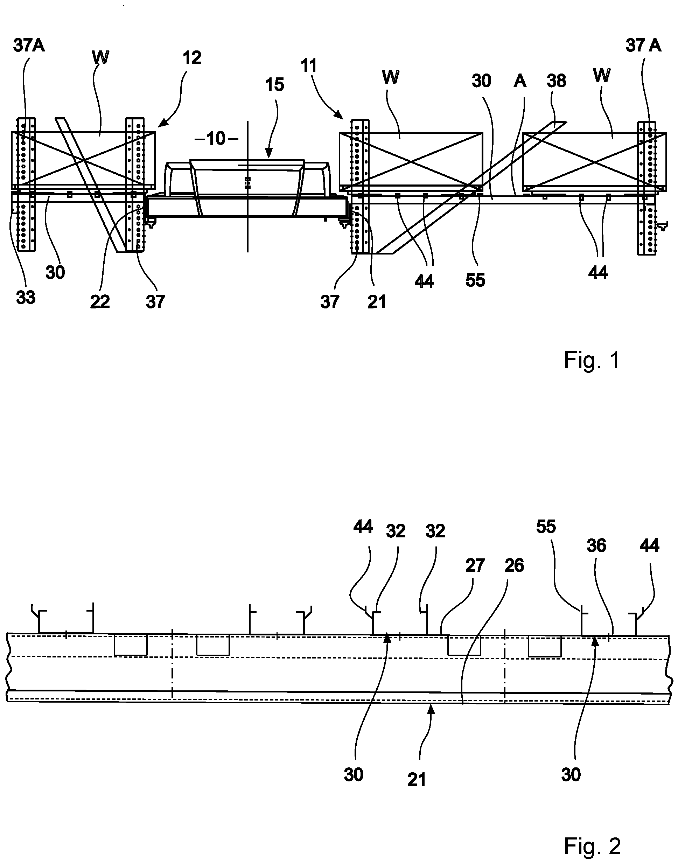

Bei dem Ausführungsbeispiel Fig. 1 befinden sich Waren W in einem ersten Regalelement 11 auf der einen, hier rechten Seite einer Regalgasse 10, und andere Waren W in einem zweiten Regalelement 12 auf der gegenüberliegenden, hier der linken Seite der Regalgasse 10. Dabei ist, wiederum als Ausführungsbeispiel, das erste Regalelement 11 für eine Warenlagerung mit beidseitiger und daher doppelter Einlagerungstiefe vorgesehen, hingegen das zweite Regalelement 12 für eine Warenlagerung mit nur einfacher Einlagerungstiefe.

Die Warenbeschickung und -entnahme erfolgt durch ein in der Regalgasse automatisch und insbesondere programmgesteuert fahrbares Regalbedienfahrzeug 15, ein sogenanntes "Shuttle". Dieses ist längs der Regalgasse 10 schienengeführt, wozu in jeder Ebene der Regalanordnung eine Schienenanordnung aus einer an dem ersten Regalelement 11 befestigten, rechten Laufschiene 21 und einer an dem zweiten Regalelement 12 befestigten, linken Laufschiene 22 vorhanden ist. Zusätzlich zu der Längsfahrt in Regallängsrichtung ist das Regalbedienfahrzeug 15 eingerichtet, einen Ausleger seitlich nach links oder nach rechts in die dort befindlichen Regalfächer hinein zu bewegen, um dort Waren auf regalfest montierten Warenträgern 30 abzusetzen bzw. umgekehrt von den Warenträgern 30 aufzunehmen.

Die Warenträger 30 erstrecken sich quer zur Längserstreckung der Gasse 10 und sind pro Regalfach paarweise vorhanden, d.h. die in dem Regalfach gelagerte Ware W bzw. beladene Palette liegt zugleich auf einer Oberseite des ersten und einer Oberseite des zweiten Warenträgers auf. Jeder Warenträger 30 ist ein einstückiges Profilelement, dessen Oberseite eine Auflageebene für die vertikal abgestützte Ware W bildet.

Die Warenträger 30 erstrecken sich parallel zueinander und sie sind mit ihrem vorderen, der Gasse 10 zugewandten Ende direkt auf der jeweiligen, regalfest montierten Laufschiene 21, 22 der Schienenanordnung abgestützt. Zusätzlich können sie an der Laufschiene fixiert sein.

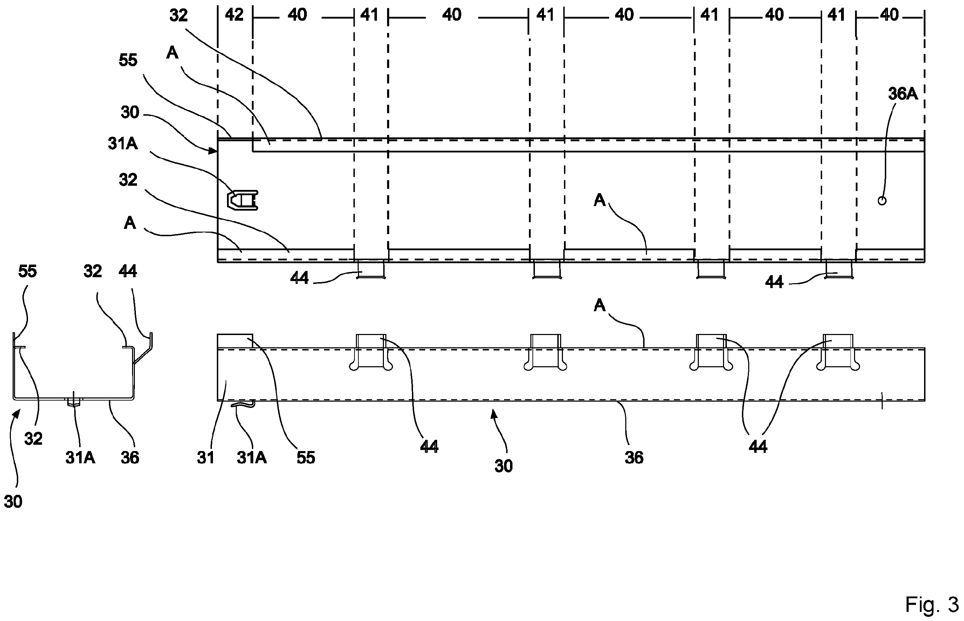

Die anderen, hinteren Enden der Warenträger 30 können analog an Laufschienen in einer benachbarten, parallelen Regalgasse befestigt sein. Alternativ, siehe Fig. 3, können die Warenträger 30 an ihren hinteren Enden 31 mit einer einstückig angeformten Lasche 31A versehen sein. Die Lasche 31A ist nach hinten frei auskragend geformt. Der Warenträger 30 lässt sich mittels der Lasche 31A verschraubungsfrei in einer Ausnehmung einer hinteren Traverse 33 fixieren, die sich parallel zu der Gasse 10 erstreckt. Von montagetechnischem Vorteil ist, dass diese Montage und zugleich Fixierung ohne Einsatz von Werkzeugen von der Gasse 10 her erfolgen kann.

Die Laufschienen 21, 22 bzw. hinteren Traversen 33 sind ihrerseits an vertikalen Stützen 37, 37A befestigt, die Teil der statische Grundstruktur der Regalanordnung sind. Weitere Bestandteile dieser Grundstruktur können quer zu den Gassen 10 verlaufende Träger sein, die hintereinander angeordnete Stützen 37, 37A miteinander verbinden, und/oder diagonale Verstrebungen 38 zwischen den vorderen 37 und hinteren Stützen 37A.

Die das Rollen des Shuttle 15 längs der Gasse 10 ermöglichende Laufschiene 21, 22 ist ein Profil von vorzugsweise S-förmigem Profilquerschnitt. An dem Profil sind, auf einem tieferen Niveau, ein Laufflächenabschnitt 26 zum Befahren durch die Laufräder des Shuttle und, auf einem höheren Niveau, ein Tragabschnitt 27 ausgebildet. Auf dem Tragabschnitt 27 stützen sich die vorderen, der Gasse 10 zugewandten Enden der Warenträger 30 ab. Eine Abstützung dieser Enden z. B. an zusätzlichen Traversen oder Trägern ist nicht notwendig und nicht vorhanden.

Die vorderen Enden der Warenträger 30 sind zumindest in Längsrichtung der Warenträger 30 an dem Tragabschnitt 27 fixiert. Vorzugsweise sind sie auch in Richtung quer zu den Warenträgern fixiert. Beides wird z. B. durch eine Schraube oder einen Bolzen erreicht, die bzw. der vertikal gleichzeitig durch ein Loch 36A im Boden 36 des Warenträgers 30 und durch ein Loch im Tragabschnitt 27 der Laufschiene 21, 22 führt.

Der Warenträger 30 ist ein durch Biegeprozesse hergestelltes, einstückiges Profilelement, dessen Oberseite die Auflage für die Ware W bildet. Beim Ausführungsbeispiel ist der Warenträger 30 als ein Profilelement von C-förmigem Profilquerschnitt ausgebildet, wobei der C-förmige Profilquerschnitt liegend angeordnet ist, er also nach oben offen ist. Die beiden freien Enden 32 des Profilquerschnitts sind zueinander gerichtet, und ihre flachen Oberseiten bilden die Auflagefläche A für die gelagerten Waren W. Der Profilquerschnitt des Profilelements setzt sich daher zusammen aus dem horizontalen Boden 36, zwei vertikal oder in etwa vertikal verlaufenden Seitenwänden sowie den zwei freien Enden 32, die zwischen sich die Öffnung des Profilquerschnitts begrenzen. Die Enden 32 sind aufeinander zu gerichtet und sie erstrecken sich horizontal in derselben Horizontalebene, so dass die Oberseiten der beiden Enden 32 gemeinsam die zweigeteilte Auflagefläche A für die Waren W bilden.

Über seine Länge ist der Warenträger 30 nicht von gleichbleibendem Profilquerschnitt. Vielmehr ist er, entlang seiner Längserstreckung, abschnittsweise mit Materialverformungen 44, 55 versehen, die auf diesen Abschnitten zu einer anderen Querschnittsform führen. Konkret ist die Gestaltung derart, dass sich zwischen längeren Hauptlängsabschnitten 40 des Warenträgers 30, auf denen dieser jeweils dieselbe, einheitliche Querschnittsform aufweist, vergleichsweise kurze Längsabschnitte 41, 42 befinden, auf denen der Warenträger 30 infolge der Materialverformung 44, 55 eine Querschnittsform aufweist, die unterschiedlich ist zu der Querschnittsform auf den Hauptlängsabschnitten 40. Vorzugsweise wechseln sich die Hauptlängsabschnitte 40 mit den vergleichsweise kurzen Längsabschnitten 41, 42 ab.

Da in jedem Regalfach die Warenträger 30 paarweise angeordnet sind, sind die Materialverformungen 44, 55 an dem zweiten Warenträger spiegelbildlich im Vergleich zu den Materialverformungen 44, 55 an dem ersten Warenträger angeordnet.

Die Funktion der vergleichsweise längeren Hauptlängsabschnitte 40 der Warenträger 30 besteht vor allem in der Bereitstellung der Auflagefläche A für die gelagerte Ware W. Daher beträgt die summierte Länge der Hauptlängsabschnitte vorzugsweise mindestens das 4-fache der summierten Länge der kurzen Längsabschnitte 41, 42.

Bei dem Ausführungsbeispiel Fig. 3 beträgt die Anzahl der Hauptlängsabschnitte 40, auf denen der Warenträger 30 jeweils dieselbe, einheitliche Querschnittsform aufweist, fünf. Diese Anzahl sollte mindestens drei betragen.

Aufgrund der Materialverformungen 44, 55 weist der Warenträger 30 auf den vergleichsweise kürzeren Längsabschnitten 41, 42 nicht den Profilquerschnitt von rechteckiger und symmetrischer Grundform auf wie auf den Hauptlängsabschnitten 40, sondern einen in Bezug auf die Profilmitte asymmetrischen Profilquerschnitt. Mit den abweichenden Querschnittsformen auf den kurzen Längsabschnitten 41, 42 sind bestimmte, im Rahmen der Warenlagerung eine Rolle spielende Zusatzfunktionen verknüpft, die der Warenträger 30 daher ebenfalls erfüllt.

Die Materialverformungen 44, 55 sind jeweils Laschen, welche von der im Übrigen rechteckigen Grundform des Warenträgers 30 nach außen abstehen.

Die Lasche 44, 55, welche ein- oder mehrfach geknickt oder gerade gestaltet sein kann, wird vorzugsweise durch einen Biegeprozess gefertigt. Der Biegeprozess erfolgt im Rahmen der Kaltverformung eines flachen Blechzuschnitts zu dem C-Profil des Warenträgers 30. Noch vor dem Biegeprozess erfolgt ein Stanzprozess. Dabei werden in den Blechzuschnitt von dessen Rand ausgehende Schlitze eingebracht, die sich quer zur Längserstreckung des Blechzuschnitts bzw. späteren Warenträgers erstrecken. Auf diese Weise ist das zwischen den Querschlitzen angeordnete Blechmaterial zunächst freigestellt. Aus den so freigestellten Blechbereichen werden anschließend die Laschen 44, 55 geformt.

Da sich die Querschlitze in einem der beiden freien Enden 32 des fertigen Profilquerschnitts befinden und damit dort, wo sich die Auflagefläche erstreckt, kommt es zwischen den Querschlitzen zu einer Unterbrechung der Auflagefläche A. Die Tragfähigkeit des Warenträgers 30 wird dadurch jedoch nicht nennenswert geschwächt, denn diese beruht vor allem auf den ausreichend langen Hauptlängsabschnitten 40.

Die Materialverformungen in Gestalt der Laschen 44, 55 stehen alle derart von der rechteckigen Grundform des Warenträgers 30 ab, dass sie sich bis in eine Horizontalebene erstrecken, die höher als die Auflageebene A angeordnet ist.

Zur Bereitstellung seitlicher Anschläge für die gelagerte Ware erstrecken sich die auf den kurzen Längsabschnitten 41 vorhandenen Laschen 44 zusätzlich seitlich über die eigentliche Auflagefläche A hinaus. Diese Laschen 44 befinden sich alle auf derselben Seite in Bezug auf die Längsmittellinie des Warenträgers 30. Die mit den Laschen 44 erzielte Zusatzfunktion besteht darin, ein zu starkes seitliches Versetzen der gelagerten Ware W zu verhindern. Zum Beispiel kann es zu einem schleichenden seitlichen Versetzen der Ware durch Erschütterungen kommen, die durch die Bewegung und die Arbeit des Shuttle 15 in das Regalelement 11, 12 eingeleitet werden. Zu solchen Einflüssen kann es vor allem deshalb kommen, da die Warenträger 30 direkt an der Laufschiene 21 bzw. 22 für den Shuttle befestigt und dadurch für Erschütterungen besonders anfällig sind.

Da für jedes Regalfach zwei Warenträger 30 vorhanden sind, sind die Laschen 44 nur an den einander abgewandten Längsrändern der beiden Warenträger 30 angeordnet, und finden sich nicht an den einander zugewandten Längsrändern.

Eine anders gestaltete, auf dem Längsabschnitt 42 vorhandene Lasche 55 erstreckt sich zwar ebenfalls nach oben über die Auflagefläche A hinaus, jedoch nicht zusätzlich zur Seite hin. Die mit der Lasche 55 erzielte Zusatzfunktion besteht darin, einen rückwärtigen Begrenzungsanschlag zu bilden. Dieser verhindert, dass eine Ware W zu tief in Längsrichtung der Warenträger 30 abgesetzt wird.

Im linken Teil der Fig. 1 und in Fig. 3 dargestellt ist der Warenträger 30 für eine einseitige Bedienbarkeit, also für die Bedienung von einem Ende bzw. von einer Regalgasse her. Bei dieser Ausführungsform ist an dem Boden 36 des Warenträgers 30, für die hintere Fixierung des Warenträgers 30, die bereits beschriebene Lasche 31A ausgebildet. Die den rückwärtigen Begrenzungsanschlag bildende Lasche 55 befindet sich ebenfalls am hinteren Ende des Warenträgers 30.

Im rechten Teil der Fig. 1 dargestellt ist eine andere Ausführungsform, bei der der Warenträger doppelt lang und für eine beidseitige Nutzung gestaltet ist, bei der also Waren W von zwei einander abgewandten Enden und Regalgassen her ein- und ausgelagert werden können. Die mindestens eine Lasche 55 befindet sich in diesem Fall in etwa auf halber Länge des doppelt langen Warenträgers 30.

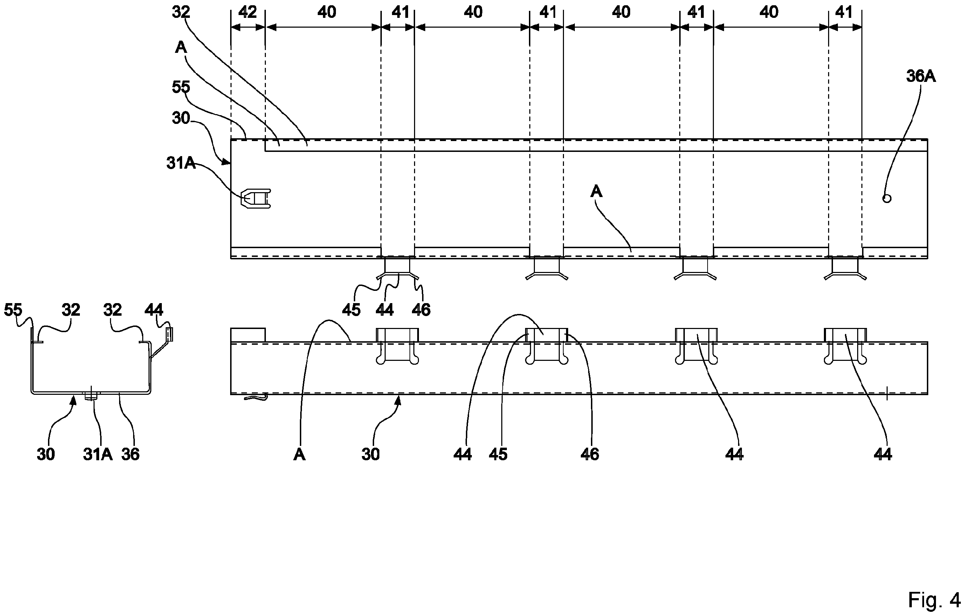

Fig. 4 zeigt eine weitere Ausgestaltung eines Warenträgers 30 für eine erfindungsgemäße Regalanordnung. Zur Vermeidung von Wiederholungen wird nachfolgend lediglich auf die Unterschiede zum in Fig. 3 gezeigten Warenträger 30 eingegangen, wobei gleichen Merkmalen gleiche Bezugszeichen zugeordnet werden.

Der Warenträger 30 weist gemäß Fig. 4 Führungsabschnitte 45, 46 auf, wobei die Führungsabschnitte 45, 46 in der Draufsicht auf die Auflagefläche A betrachtet eine Neigung zur Längserstreckung des Warenträgers 30 aufweisen.

Die Führungsabschnitte 45, 46 dienen dazu, dass etwaige außermittig bewegte Waren, entlang der Führungsabschnitte 45, 46 abgleiten, um auf diese Weise zentriert und parallel zur Längserstreckung der Warenträger 30 ausgerichtet zu werden. So kann ein Verkanten der Waren zwischen den Materialverformungen verhindert werden.

Gegenüberliegende Führungsabschnitte 45, 46 benachbarter Warenträger bilden eine Trichterform aus.

Jeder Materialverformung 44 bzw. Lasche 44 sind zwei Führungsabschnitte 45, 46 zugeordnet.

Die Führungsabschnitte 45, 46 sind Teil der Laschen 44. Die Führungsabschnitte 45, 46 sind daher integraler Bestandteil der Laschen 44 sein und einstückig mit den Laschen 44 gebildet sein.

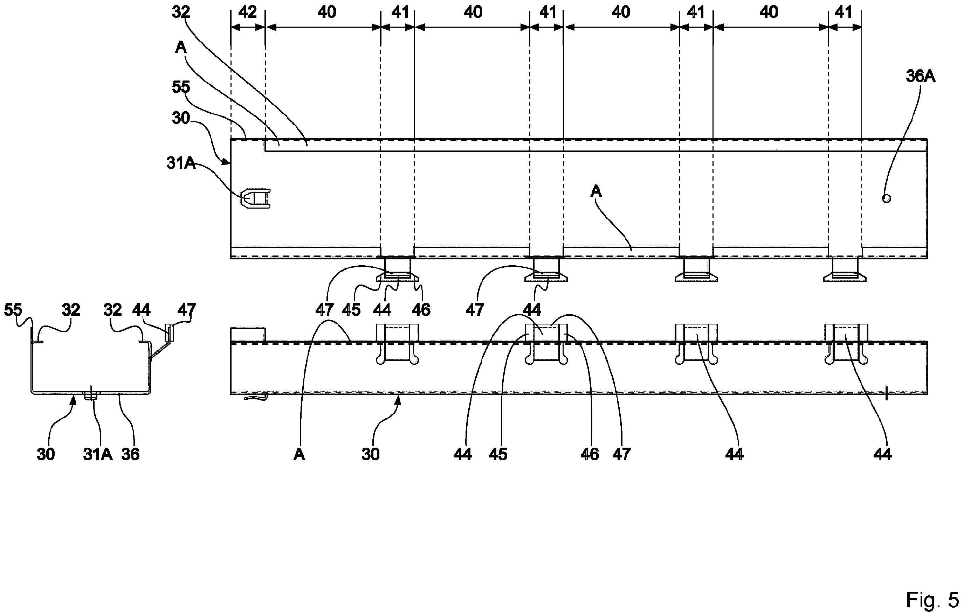

Fig. 5 zeigt eine weitere Ausgestaltung eines Warenträgers 30 für eine erfindungsgemäße Regalanordnung. Zur Vermeidung von Wiederholungen wird nachfolgend lediglich auf die Unterschiede zum in Fig. 4 gezeigten Warenträger 30 eingegangen, wobei gleichen Merkmalen gleiche Bezugszeichen zugeordnet werden.

Der Warenträger 30 weist gemäß Fig. 5 Führungsabschnitte 45, 46 auf, die an den Laschen 44 befestigte Aufsätze 47 sind und zwar auf die Laschen 44 aufgesteckte Aufsätze 47 sind. Jeder Aufsatz 47 bildet zwei Führungsabschnitte aus und zwar einen Führungsabschnitt 45 und einen Führungsabschnitt 46.

### Bezugszeichen

- 10: Regalgasse, Gasse
- 11: Regalelement
- 12: Regalelement
- 15: Regalbedienfahrzeug (Shuttle)
- 21: Laufschiene
- 22: Laufschiene
- 26: Laufflächenabschnitt der Laufschiene
- 27: Tragabschnitt der Laufschiene
- 30: Warenträger
- 31: Ende des Warenträgers
- 31A: Lasche
- 32: Ende
- 33: Traverse
- 36: Boden
- 36A: Loch
- 37: vordere vertikale Stütze
- 37A: hintere vertikale Stütze
- 38: diagonale Verstrebung
- 40: Hauptlängsabschnitt
- 41: kurzer Längsabschnitt
- 42: kurzer Längsabschnitt
- 44: Lasche, Materialverformung
- 45: Führungsabschnitt
- 46: Führungsabschnitt
- 47: Aufsatz
- 55: Lasche, Materialverformung

- A: Auflagefläche
- W: Ware

## Patentansprüche

1. Regalanordnung für die Warenlagerung, mit einer durch ein automatisch betriebenes Regalbedienfahrzeug (15) befahrbaren Gasse (10), einem ersten Regalelement (11) auf einer Seite der Gasse, einem zweiten Regalelement (12) auf der gegenüberliegenden anderen Seite der Gasse, einer zum Befahren durch das Regalbedienfahrzeug (15) ausgebildeten Schienenanordnung an den Regalelementen (11, 12), sowie in den Regalelementen (11, 12) angeordneten Warenträgern (30) mit Längserstreckung quer zu der Gasse (10), wobei jeder Warenträger (30) ein einstückiges Profilelement ist, dessen Oberseite eine Auflagefläche (A) für eine auf dem Warenträger (30) lagerbare Ware (W) bildet, **dadurch gekennzeichnet, dass** der Warenträger (30) entlang seiner Längserstreckung abschnittsweise Materialverformungen (44, 55) aufweist, wobei sich zwischen längeren Hauptlängsabschnitten (40), auf denen der Warenträger (30) jeweils dieselbe, einheitliche Querschnittsform aufweist, kurze Längsabschnitte (41, 42) befinden, auf denen der Warenträger (30) eine durch die Materialverformung (44, 55) bedingte, abweichende Querschnittsform aufweist.

2. Regalanordnung nach Anspruch 1, **dadurch gekennzeichnet, dass** jeweils zwei Warenträger (30) mit Abstand parallel zueinander angeordnet sind und gemeinsam eine Auflage für die darauf lagerbare Ware (W) bilden, wobei die Materialverformungen (44, 55) an dem zweiten Warenträger spiegelbildlich im Vergleich zu den Materialverformungen (44, 55) an dem ersten Warenträger angeordnet sind.

3. Regalanordnung nach Anspruch 1 oder 2, **dadurch gekennzeichnet, dass** die summierte Länge der Hauptlängsabschnitte (40) mindestens das 4-fache der summierten Länge der kurzen Längsabschnitte (41, 42) beträgt.

4. Regalanordnung nach einem der Ansprüche 1 - 3, **dadurch gekennzeichnet, dass** die Anzahl der Hauptlängsabschnitte (40) mindestens drei beträgt.

5. Regalanordnung nach einem der vorangehenden Ansprüche, **dadurch gekennzeichnet, dass** sich auf den kurzen Längsabschnitten (41, 42) die Materialverformungen (44, 55) bis in eine Horizontalebene höher als die Ebene der Auflagefläche (A) erstrecken.

6. Regalanordnung nach einem der vorangehenden Ansprüche, **dadurch gekennzeichnet, dass** die Materialverformungen jeweils von dem Warenträger abstehende Laschen (44, 55) sind, vorzugsweise infolge eines Biegeprozesses abstehende Laschen.

7. Regalanordnung nach einem der vorangehenden Ansprüche, **dadurch gekennzeichnet, dass** jeder Warenträger (30) als ein nach oben offenes Profil von C-förmigem Profilquerschnitt ausgebildet ist, wobei die beiden Enden (32) des Profilquerschnitts aufeinander zu gerichtet sind und gemeinsam die Auflagefläche (A) für die Ware (W) bilden.

8. Regalanordnung nach Anspruch 7 in Verbindung mit Anspruch 6, **dadurch gekennzeichnet, dass** die Laschen (44, 55) durch Querschlitze im Material des Warenträgers (30) freigestellt sind, wobei sich die Querschlitze in einem der beiden Enden (32) des Profilquerschnitts befinden und die Auflagefläche (A) zwischen den Querschlitzen eine Unterbrechung aufweist.

9. Regalanordnung nach Anspruch 6 oder 8, **dadurch gekennzeichnet, dass** sich, zur Bereitstellung seitlicher Anschläge für die auf der Auflagefläche (A) lagerbare Ware (W), die Laschen (44) auf mehreren der kurzen Längsabschnitte (41) seitlich über die Auflagefläche hinaus erstrecken.

10. Regalanordnung nach Anspruch 9, **dadurch gekennzeichnet, dass** sich alle seitlich über die Auflagefläche (A) hinaus erstreckenden Laschen (44) auf derselben Seite in Bezug auf die Längsmittellinie des Warenträgers (30) befinden.

11. Regalanordnung nach Anspruch 6 oder 8, **dadurch gekennzeichnet, dass** sich, zur Bereitstellung eines Begrenzungsanschlags in Längsrichtung für die Ware (W), eine Lasche (55) auf einem der kurzen Längsabschnitte (42) nach oben über die Auflagefläche (A) hinaus erstreckt.

12. Regalanordnung nach einem der vorangehenden Ansprüche, **dadurch gekennzeichnet, dass** die Schienenanordnung eine an dem ersten Regalelement (11) befestigte, erste Laufschiene (21) und eine an dem zweiten Regalelement (12) befestigte, zweite Laufschiene (22) umfasst, und dass die der Gasse (10) zugewandten Enden der Warenträger (30) direkt auf der jeweiligen Laufschiene (21 bzw. 22) abgestützt sind.

13. Regalanordnung nach Anspruch 12, **dadurch gekennzeichnet, dass** die Laufschiene (21, 22) ein Profil von S-förmigem Profilquerschnitt ist.

14. Regalanordnung nach Anspruch 12 oder 13, **dadurch gekennzeichnet, dass** an der Laufschiene (21, 22) ein Laufflächenabschnitt (26) zum Befahren durch Laufräder des Regalbedienfahrzeugs (15) und ein die Enden der Warenträger (30) stützender Tragabschnitt (27) ausgebildet sind.

15. Regalanordnung nach einem der Ansprüche 12 - 14, **dadurch gekennzeichnet, dass** die Enden der Warenträger (30) zumindest in Längsrichtung an der Laufschiene (21, 22) fixiert sind.

16. Regalanordnung nach einem der vorangehenden Ansprüche, **dadurch gekennzeichnet, dass** den Materialverformungen (44) Führungsabschnitte (45, 46) zugeordnet sind, wobei die Führungsabschnitte (45, 46) in einer Draufsicht auf die Auflagefläche (A) betrachtet eine Neigung zur Längserstreckung des Warenträgers (30) aufweisen.

17. Regalanordnung nach Anspruch 16,
**dadurch gekennzeichnet, dass** gegenüberliegende Führungsabschnitte (45, 46) benachbarter Warenträger (30) eine Trichterform ausbilden.

18. Regalanordnung nach Anspruch 16 und nach Anspruch 6,
**dadurch gekennzeichnet, dass** die Führungsabschnitte (45, 46) Teil der Laschen (44) sind oder dass die Führungsabschnitte (45, 46) an den Laschen (44) befestigte Aufsätze (47) sind, insbesondere auf die Laschen (44) aufgesteckte Aufsätze (47) sind.
